# EUROPEAN PATENT SPECIFICATION

(11) **EP 0 964 816 B1**
(45) Date of publication and mention of the grant of the patent: **22.05.2002**
(21) Application number: 98909573.2
(22) Date of filing: 04.03.1998
(51) Int. Cl.: B64D 39/00

(54) **A DROGUE ASSEMBLY FOR IN-FLIGHT REFUELLING**
SCHLEPPBREMSANORDUNG ZUR TREIBSTOFFAUFNAHME EINES FLUGZEUGES WÄHREND DES FLUGES
CONE DE RAVITAILLEMENT EN VOL

(30) Priority: 04.03.1997 GB 9704472
(43) Date of publication of application: 22.12.1999
(73) Proprietor: Flight Refuelling Limited, Wimborne, Dorset BH21 2BJ (GB)
(72) Inventor: YOUNG, Roy Gerald Seymour, Bournemouth, Dorset BH10 6DQ (GB); ANSTEY, David Percy, Christchurch, Dorset BH23 2HU (GB)
(74) Representative: Everitt, Christopher James Wilders
(86) International application number: GB9800560
(87) International publication number: WO9839208

(56) References cited:
- US-A- 2 946 543
- US-A- 2 960 291
- US-A- 3 048 357

## Description

This invention relates to a drogue assembly for inflight refuelling.

Drogues are used to stabilise refuelling hose trailing from a tanker aircraft in a generally horizontal attitude. They provide drag for a refuelling coupling at the trailing end of the refuelling hose which is to be coupled for in-flight refuelling with a probe from a following aircraft which is to be refuelled. This drag resists the forward movement of the probe.

US-A-2,960,261, US-A-2,946,534 and US-A-3,048,357 each disclose a drogue assembly which is as in defined by the preamble of claim 1. In a known form of such a drogue assembly, each of the support arms is pivotally mounted on a respective pivot pin, the pivot pins being arranged in a ring so as to serve as the pivot mounting of the array from which the support arms extend in said one direction, each support arm being generally triangular and being pivotally mounted by an apex thereof, the side of each generally triangular support arm nearer to the axis being longer and the side remote from the ring being shorter than the third side, the drogue parachute being fitted to the shorter sides of the support arms.

If tie wires, each having a retaining ball at either end, are provided for limiting the circumferential spacing between adjacent support arms of the circumferential array, there is a risk of engine damage should such tie wires break, as the broken tie wire pieces may be dislodged from the drogue assembly and drawn into an engine air intake. This problem can be reduced, but not eliminated, by providing each tie wire with a third retaining ball between its ends so only part of the wire with a single ball may be dislodged in the event of a break.

One object of this invention is to provide a drogue assembly of the kind referred to above with means for limiting the circumferential spacing of the support arms which is unlikely to break into pieces which may be dislodged from the assembly.

According to this invention there is provided a drogue assembly of the kind referred to above, wherein each adjacent pair of support arms are joined together by a net.

Preferred features are claimed in the sub claims.

One form of drogue assembly in which this invention is embodied is described now by way of example with reference to the accompanying drawings, of which:-
Figure 1 is a general view in perspective of a drogue assembly, with its clamping rings shown separately, displaced therefrom;
Figure 2 is a section on the line II-II of Figure 1, showing a support arm in elevation with part of the drogue parachute to which it is to be fitted;
Figure 3 is a view on arrow III in Figure 2 of a fragment of the drogue assembly; and
Figure 4 is a fragmentary view in the direction of arrow IV in Figure 2.

The drawings show a drogue assembly 10. The drogue assembly 10 comprises a circumferential array of support arms 11. Each support arm 11 comprises a generally triangular metal frame 12 having a short side 13 and two longer sides 14 and 15. One, 14, of those longer sides , which is a little longer than the other longer side 15, is disposed radially inwardly with respect to that other side 15 and is fitted into the channel of a metal channel section member 16. There is a clearance between the edge of the frame 12 within the channel and the base of that channel. The frame 12 is rivetted to the channel section member 16. The short side 13 of each support arm 11 has a hook element 17,18 of plastics material secured to it at either end by bolts so that the hook cavities of the two hook elements 17 and 18 face each other.

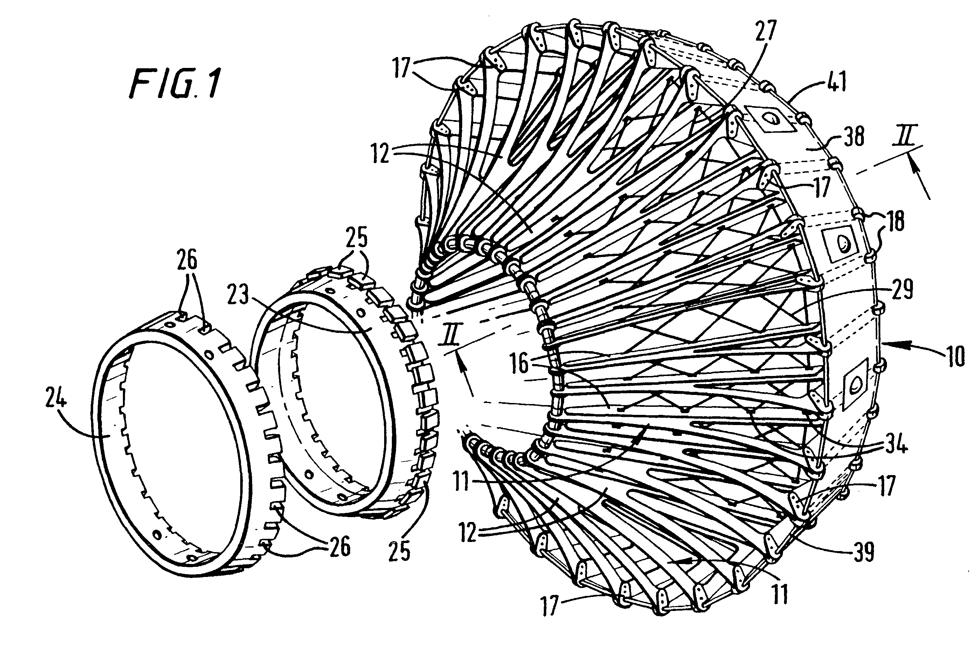

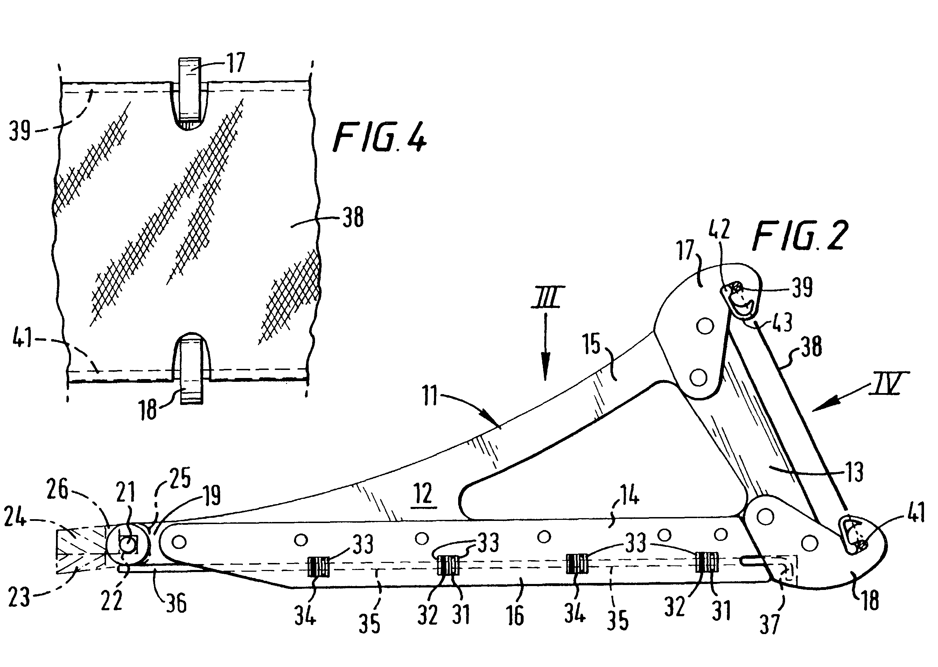

Each support arm 11 is pivotally mounted in the region of its apex 19 which is formed by the two longer sides 14 and 15, for swinging movement in a radial direction. Each support arm 11 is pivotally mounted on a pivot pin 21 which passes through a hole 22 in the frame 12 in the region of the apex 19. The pivot pins 21, which are arranged end to end in a ring, as can be seen in Figures 1 and 2, are trapped between inner and outer clamp rings 23 and 24. The inner clamp ring 23 is castellated around its outer surface at one end so that it forms a circumferential array of abutments 25 against which the pivot pins 21 are held by the outer clamp ring 24 which is fitted over the remainder of the inner clamp ring 23 which projects through the ring of pivot pins 21. The outer clamp ring 24, which tapers away from the support arms 11, has an annular array of slots 26 formed in its larger diameter end, each slot 26 being aligned with a respective one of the support arms 11. The slots 26 are also aligned with the spaces between the abutments 25 and each slot 26 and the space with which it is aligned allows for the swinging movement of the aligned support arm 11. The clamp rings 23 and 24 are bolted together with pivot pins 21 trapped between them. The pivot pins 21 are trapped between the clamp rings 23 and 24 in a manner which allows each support arm 11 to pivot independently of the others.

Each juxtaposed pair of support arms 11 is joined together by a net 27 which is joined to each of those support arms 11 at spaced intervals along the channel section member 16 of that support arm 11. The net 27 comprises a cord formatted in a laced pattern which comprises loops between knots 28. In effect it is one length of cord, arranged in a wave form and knotted at overlapping points to form pairs of opposed loops between each adjacent pair of knots 28. Each piece 31,32 of the cord that extends between each knot 28 is wound around a reel 33 whereby that reel 33 is entrapped in it. Each reel 33 comprises a ring which is flanged at either end so that it forms an annular channel which receives the cord material of the respective cord piece 31,32 that is wound therearound. There is an arcuate link which is formed integrally with the remainder of the reel 33 and which is joined at either end to a respective one of the flanges whereby to complete the perimeter of an aperture through which the cord wound around the reel 33 is passed.

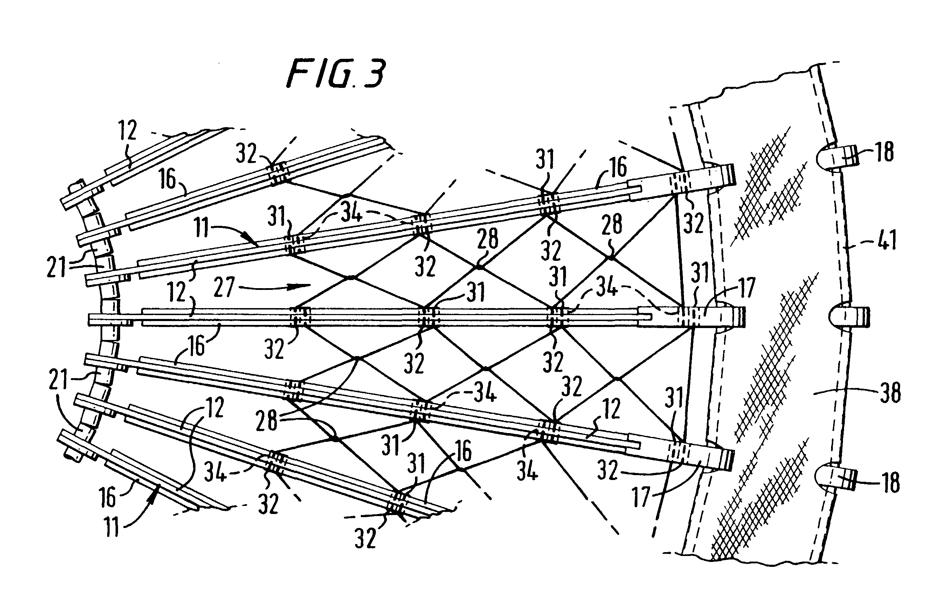

The channel section member 11 and the longer side 14 of the frame 12 which is fitted into its channel, together form a series of rectangular apertures 34 at spaced intervals along the length of the channel section member 16. Adjacent apertures 34 are interconnected by respective passages 35 which are formed by the space between the base of the channel and the edge of the frame 12 received within the channel. Each aperture 34 accommodates a reel 33 of a respective loop of the net 27 on either side of the respective support arm 11. A pin 36 extends through the aligned passages 35 from end to end of the frame 12 so that it bridges the line of apertures 34 and is passed through the central aperture of each reel 33 in each aperture 34 whereby each reel 33 is retained within the respective aperture 34 and the nets 27 on either side of each support arm 11 are connected to that support arm 11. The pin 36 has a hooked end 37 (see Figure 3) which is fitted into an alcove in the hook element 18 at the adjacent end of the short side 13 so that it is entrapped therein, the alcove having a slot-shaped mouth through which the pin 36 projects.

Figure 1 shows that the support arms 11 carry a drogue parachute 38 which extends circumferentially around their short sides 13. The drogue parachute 38 comprises a circumferentially continuous strip of fabric which is reinforced along each of its axially-spaced peripheral edges by a respective fabric cord hoop 39,41. Figures 3 and 4 shows that the fabric of the drogue parachute 38 is cut away in the region of each hook element 17,18 to expose the respective hoop 39,41 which is received in the hook cavity of that hook element 17,18. There is sufficient clearance at the mouth of the hook cavity for the hoop 39,41 to be passed through it during assembly. Each hoop 39,41 is retained in the respective hook cavity by an enlarged end 42 of a strap element 43 which is fitted into the hook cavity between the hoop 39,41 and the mouth of the hook cavity and which is too large to be passed through the mouth of the hook cavity. The enlarged end 42 was inserted into the hook cavity from one side thereof and is a sliding fit therein. The remainder of the strap element 43 extends from the enlarged end 42 through the mouth of the hook cavity and around the outer surface of the respective hook element 17,18 to which it is joined.The strap element 43, including its enlarged end 42, is integral with the respective hook element 17,18, the whole being a moulding of plastics material.

## Claims

1. A drogue assembly (10) for in-flight refuelling comprising a circumferential array of pivotally-mounted support arms (11), each extending in one direction which is generally parallel to an axis with which the array is concentric, each support arm (11) being pivotable in a direction which is radial with respect to said axis, and a drogue parachute (38) which is fitted to the support arms (11), the arrangement being such that the support arms (11) with the drogue parachute (38) thereon can be collapsed within a cylindrical envelope having a diameter substantially that of the pivot mounting of the array, whereas when the drogue assembly (10) is towed by an aircraft in flight, it is extended in the manner of a parachute with the support arms (11) flared outwardly from the axis, trailing the pivot mounting, **characterised in that** each adjacent pair of support arms (11) are joined together by a net (27).

2. A drogue assembly (10) according to claim 1, wherein each net (27) is joined to a respective support arm (11) at spaced intervals along the latter.

3. A drogue assembly (10) according to claim 2, wherein each joint comprises a loop (31,32) of the net material which is retained within a respective aperture (34)in the support arm (11).

4. A drogue assembly (10) according to claim 3, wherein the apertures (34) are in a row, adjacent apertures (34) being interconnected by respective elongate passages (35) which are in line and the loops (31,32) being retained within their respective apertures (34) by a common pin (36) which is inserted into the aligned passages (35) so that it bridges each of the apertures (34) wherein it is threaded through the respective loop (31,32) so that the net (27) is joined to the support arm (11) by the pin (36) which is threaded through the row of loops (31,32) and which is retained within the aligned passages (35).

5. A drogue assembly (10) according to claim 4, wherein each loop (31,32) of net material is wound circumferentially around a reel (33) through which the pin (36) extends, the reel (33) being entrapped within the net (27) by the loop (31,32)that is wound around it.

6. A drogue assembly (10) according to claim 5, wherein the reel (33) is flanged at either end so that it forms an annular channel within which the net material wound therearound is received.

7. A drogue assembly (10) according to claim 6, including an arcuate link formed integrally with the remainder of the reel (33) and joined at either end to a respective one of the flanges so as to cooperate with the flanges to form an aperture through which the net material wound around the reel (33) is passed.

8. A drogue assembly (10) according to any one of claims 1 to 7, wherein each support arm (11) is provided with a pair of hook elements (17 and 18) at its end remote from its pivot mounting, the hook elements (17 and 18) being spaced apart in the direction of pivotable movement of the support arms (11) and each hook element (17 and 18) facing the other and receiving a respective edge portion (39,41) of the drogue parachute (38) which is retained therein by retaining means (42) fitted therein, whereby the drogue parachute (38) is fitted to the circumferential array of support arms (11).

9. A drogue assembly (10) according to claim 8, wherein the retaining means comprise a strap element (43) which is enlarged at its free end (42) and which is joined to the outer surface of the respective hook element (17,18), the enlarged end (42) being a sliding fit within the hook cavity.

## Patentansprüche

1. Schleppbremsanordnung (10) zur Treibstoffaufnahme eines Flugzeuges während des Fluges mit in Kreisform schwenkbar angeordneten, gleichgerichteten Tragarmen (11), die in einer Richtung parallel zur Zentralachse des Kreises verlaufen, wobei jeder Tragarm (11) in einer Richtung radial zu der Zentralachse schwenkbar ist, und mit einem den Tragarmen (11) zugeordneten Bremsschirm (38), wobei die Anordnung derart ist, dass die Tragarme (11) mit dem ihnen zugeordneten Bremsschirm (38) innerhalb eines zylindrischen Umschlages mit einem Durchmesser zusammenfaltbar sind, der dem Durchmesser der Kreisform entspricht, in der die Schwenklagerungen angeordnet sind, während die Tragarme mit dem ihnen zugeordneten Bremsschirm, wenn die Schleppanordnung (10) während des Fluges von einem Flugzeug geschleppt wird, bei geschleppten Schwenklagerungen nach der Art eines Fallschirmes gegenüber der Zentralachse nach außen aufgerichtet sind,
dadurch gekennzueichnet,
dass die aufeinanderfolgenden Tragarme (11) jedes Tragarmepaares durch ein Netz (27) miteinander vereinigt sind.

2. Schleppbremsanordnung (10) nach Anspruch 1, bei der jedes Netz (27) mit den jeweiligen Tragarmen (11) in deren Längsrichtung gegeneinander versetzt verbunden sind.

3. Schleppbremsanordnung (10) nach Anspruch 2, bei der jede Verbindung eine Schleife (31, 32) aus dem Netzmaterial aufweist, das durch eine Öffnung (34) des jeweiligen Tragarms (11) gezogen ist.

4. Schleppbremsanordnung (10) nach Anspruch 3, bei der Öffnungen (34) in einer Reihe angeordnet sind, benachbarte Öffnungen (34) durch linienförmige Verbindungskanäle (35) miteinander verbunden sind, und Schleifen (31, 32) in den jeweiligen ihrer Öffnungen (34) durch eine gemeinsame Stange (36) gehalten sind, die in die entsprechend aufeinander ausgerichteten Verbindungskanäle (35) eingesetzt ist, derart, dass sie die jeweiligen der aufeinander ausgerichteten Öffnungen (34) überbrückt und in ihnen jeweils eine der Schleifen (31, 32) hält, sodass das Netz (27) mit dem jeweiligen Tragarm (11) durch die Stange (36) verbunden ist, die durch die Folge der Schleifen (31, 32) hindurchgeführt und in den aufeinander ausgerichteten Verbindungskanälen (35) gehalten ist.

5. Schleppbremsanordnung (10) nach Anspruch 4, bei der jede Schleife (31, 32) aus Netzmaterial in Umfangsrichtung einer Haspel (33) um diese gewickelt ist, durch die die Stange (36) hindurchgeführt ist, sodass die Haspel (33) in dem Netz (27) gehalten ist, das in der Form der Schleife (31, 32) dieses umgibt.

6. Schleppbremsanordnung (10) nach Anspruch 5, bei der die Haspel (33) an jedem ihrer Enden mit einem Flansch versehen ist und beide Flansche einen Ringkanal bilden, in dem das Netzmaterial gewickelt und gehalten ist.

7. Schleppbremsanordnung (10) nach Anspruch 6, die einen bogenförmigen Hebel einschließt, der einstückig Teil der Haspel (33) ist und an jedem Ende mit einem der Flansche verbunden ist, um mit diesen Flanschen eine Öffnung zu bilden, durch die das Netzmaterial zum Aufwickeln auf der Haspel hindurchgeführt ist.

8. Schleppbremsanordnung (10) nach jedem beliebigen der Ansprüche 1 bis 7, bei der jeder Tragarm (11) mit einem Paar von Hakenelementen (17 und 18) an dem der Schwenklagerung abgekehrten Ende versehen ist, wobei die Hakenelemente (17 und 18) in Richtung der Schwenkbewegung des Tragarmes (11) voneinander beabstandet sind, jedes Hakenelement (17 und 18) dem jeweils anderen zugekehrt ist und einen Kantenabschnitt (39, 41) des Bremsschirmes (38) aufnimmt, der in ihm mittels darin eingesetztem Haltemittel (42) gehalten ist und wobei der Bremsschirm (38) so in den in Umfangsrichtung in Reihe aufeinanderfolgenden Tragarmen (11) gehalten ist.

9. Schleppbremsanordnung (10) nach Anspruch 8, bei der die Haltemittel jeweils ein Bandmittel (43) aufweisen, das durch an seinem freien Ende (42) längenverstellbar und mit seinem anderen Ende mit der Außenseite des jeweiligen Hakenelements (17, 18) gelenkig verbunden ist, wobei das freie Ende (42) gleitfähig in der Hakenöffnung ist.

## Revendications

1. Ensemble de parachute stabilisateur en forme d'entonnoir (10) pour ravitaillement en vol comprenant une rangée périphérique de bras de support (11) montés de manière à pivoter, chaque bras s'étendant dans une direction qui est généralement parallèle à un axe par rapport auquel la rangée est concentrique, chaque bras de support (11) pouvant pivoter dans une direction qui est radiale par rapport audit axe, et un parachute stabilisateur (38) qui est fixé aux bras de support (11), l'agencement étant tel que les bras de support (11) sur lesquels le parachute stabilisateur (38) est installé peuvent être pliés dans une enveloppe cylindrique ayant un diamètre correspondant sensiblement à celui des fixations oscillantes de la rangée, alors que lorsque l'ensemble de parachute stabilisateur en forme d'entonnoir (10) est remorqué par un avion en vol, il est déplié à la manière d'un parachute, les bras de support (11) étant évasés vers l'extérieur à partir de l'axe, traînant les fixations oscillantes, **caractérisé en ce que** toutes les paires adjacentes de bras de support (11) sont reliées ensemble par un filet (27).

2. Ensemble de parachute stabilisateur en forme d'entonnoir (10) selon la revendication 1, dans lequel chaque filet (27) est relié à un bras de support (11) respectif à des intervalles espacés le long de ce dernier.

3. Ensemble de parachute stabilisateur en forme d'entonnoir (10) selon la revendication 2, dans lequel chaque raccord comprend une boucle (31, 32) du matériau constituant le filet qui est retenue dans une ouverture (34) respective pratiquée dans le bras de support (11).

4. Ensemble de parachute stabilisateur en forme d'entonnoir (10) selon la revendication 3, dans lequel les ouvertures (34) sont placées sur une rangée, les ouvertures (34) voisines étant interconnectées au moyen de passages allongés (35) respectifs qui sont alignés et *les* boucles (31, 32) étant retenues dans leurs ouvertures (34) respectives par une goupille commune (36) qui est insérée dans les passages alignés (35) afin de relier chacune des ouvertures (34), dans lesquelles elle est vissée dans la boucle (31, 32) respective de façon que le filet (27) soit relié au bras de support (11) par l'intermédiaire de la goupille (36) qui est vissée dans la rangée de boucles (31, 32) et qui est retenue dans les passages allongés (35).

5. Ensemble de parachute stabilisateur en forme d'entonnoir (10) selon la revendication 4, dans lequel chaque boucle (31, 32) du matériau constituant le filet est enroulée de manière périphérique autour d'une bobine (33) à travers laquelle s'étend la goupille (36), la bobine (33) étant incluse dans le filet (27) par la boucle (31, 32) qui est enroulée autour d'elle.

6. Ensemble de parachute stabilisateur en forme d'entonnoir (10) selon la revendication 5, dans lequel la bobine (33) est bridée à l'une ou l'autre des extrémités afin de former un canal annulaire dans lequel le matériau constituant le filet enroulé autour de la bobine est reçu.

7. Ensemble de parachute stabilisateur en forme d'entonnoir (10) selon la revendication 6, comprenant une articulation arquée intégrée au reste de la bobine (33) et reliée à l'une ou l'autre des extrémités à l'une respective des brides de façon à coopérer avec les brides pour former une ouverture par laquelle passe le matériau constituant le filet enroulé autour de la bobine (33).

8. Ensemble de parachute stabilisateur en forme d'entonnoir (10) selon l'une quelconque des revendications 1 à 7, dans lequel chaque bras de support (11) est pourvu d'une paire d'éléments formant crochet (17 et 18) à son extrémité distante de sa fixation oscillante, les éléments formant crochet (17 et 18) étant espacés dans la direction du mouvement pivotant des bras de support (11) et chaque élément formant crochet (17 et 18) faisant face à l'autre élément et recevant une portion de bord respective (39, 41) du parachute stabilisateur (38) qui est retenue dans cet élément par un moyen de retenue (42) fixé à l'intérieur, ainsi le parachute stabilisateur (38) est fixé à la rangée périphérique de bras de support (11).

9. Ensemble de parachute stabilisateur en forme d'entonnoir (10) selon la revendication 8, dans lequel le moyen de retenue comprend un élément formant bride (43) qui s'élargit au niveau de son extrémité libre (42) et qui est relié à la surface extérieure de l'élément formant crochet (17 et 18) respectif, l'extrémité élargie (42) pouvant coulisser dans la cavité de crochet.
